# FASCICULE DE BREVET EUROPEEN

(11) **EP 2 492 170 B1**
(45) Date de publication et mention de la délivrance du brevet: **22.01.2014**
(21) Numéro de dépôt: 12156511.3
(22) Date de dépôt: 22.02.2012
(51) Int. Cl.: B62D 13/02, B62D 53/00

(54) **Train de véhicules de transport à fonctionnement réversible**
Zug von Transportfahrzeugen mit umkehrbarem Betrieb
Running gear of transport vehicles with reversible operation

(30) Priorité: 23.02.2011 FR 1151453
(43) Date de publication de la demande: 29.08.2012
(73) Titulaire: Metalliance, 71230 Saint Vallier (FR)
(72) Inventeur: Cothenet, Jean-Claude, 71230 SAINT VALLIER (FR)
(74) Mandataire: Regimbeau

(56) Documents cités:
- EP-A1- 0 968 905
- WO-A1-2010/034767
- FR-A1- 2 836 419

## Description

### DOMAINE DE L'INVENTION

La présente invention porte sur un train de véhicules de transport montés sur pneu qui est destiné à fonctionner dans des zones à forte contrainte d'espace, notamment en tunnel ou en galerie. Plus précisément, l'invention porte sur un train de véhicules à fonctionnement réversible et de type monotrace.

### ETAT DE LA TECHNIQUE

Le transport de matériaux dans des zones à forte contrainte d'espace, telles que les tunnels ou les galeries, a nécessité le développement de véhicules adaptés pour répondre aux contraintes de déplacement induites, en particulier les contraintes de déplacements courbes, ou encore les manoeuvres de type demi-tour.

Ainsi, pour faciliter le déplacement de trains de véhicules montés sur pneus dans de telles zones à contraintes, il a été développé des trains de véhicule de type « monotrace » dont la conception permet à chacun des éléments du train de véhicules d'emprunter sensiblement la même trajectoire. Pour ce faire, le véhicule de tête comprend un essieu d'entrainement monté en rotation sous le châssis et portant les roues motrices du train de véhicules, tout ou partie des autres essieux du train de véhicules étant en outre également montés en rotation par rapport au châssis sous lequel ils sont fixés, ces essieux étant qualifiés d'essieux de direction. Les essieux de direction sont commandés pour pivoter afin de suivre au plus près la trajectoire courbe imposée par l'essieu d'entrainement, de sorte que l'ensemble du train de véhicules suive sensiblement cette trajectoire spécifique.

Il a également été développé des trains de véhicule à fonctionnement réversible, c'est-à-dire des trains de véhicules comprenant un véhicule de tête et un véhicule de queue pourvus respectivement d'un essieu d'entrainement, permettant de diriger le train de véhicules dans un sens ou dans l'autre sans difficulté. Un tel fonctionnement réversible est particulièrement avantageux dans les zones où la manoeuvre est complexe, notamment lorsqu'il n'est pas possible de faire demi-tour.

Dans la demande de brevet FR 2 836 419 publiée le 29 août 2003, il est proposé un train de véhicules dont les caractéristiques permettent à la fois le suivi « monotrace » d'une part et le fonctionnement réversible d'autre part. En particulier, il est proposé un train de véhicules comprenant deux modules comprenant chacun un essieu d'entrainement et au moins un essieu de direction, chaque module ayant une cabine de conduite pour une conduite dans les deux sens principaux de déplacement en fonction des besoins. Ces deux modules sont reliés entre eux par un simple timon qui permet l'articulation relative des châssis des deux modules. Ce train de véhicules permet un suivi de trajectoire « monotrace » grâce à une coordination électronique du braquage des essieux de direction des deux modules. Un tel train de véhicules présente toutefois des inconvénients en ce qu'il est de réalisation complexe, nécessitant un contrôle et une coordination électroniques de précision, et donc des coûts de fabrication et de maintenance importants. En outre, cette nécessaire coordination électronique entre les différents modules impacte et complexifie la réversibilité du train de véhicules puisque chaque changement de sens du train de véhicules impose une mise au point mort des roues, c'est-à-dire un repositionnement angulaire nul des roues par rapport au châssis.

La demande de brevet EP 0 968 905 publiée le 5 janvier 2000 propose également un train de véhicules dont les caractéristiques permettent à la fois le suivi « monotrace » d'une part et le fonctionnement réversible d'autre part. Plus précisément, il est proposé un train de véhicules dont les véhicules, montés chacun sur des essieux directeurs, sont reliés entre eux par des moyens d'articulation constituant, en outre, des moyens de commande d'orientation des essieux directeurs pour un déplacement de type monotrace du train. Deux véhicules adjacents peuvent par exemple être reliés entre eux par un système de liaison mécanique couplant les essieux adjacents de ces deux véhicules.

Un but de la présente invention est donc de proposer un train de véhicules adapté pour un fonctionnement réversible monotrace qui permet de résoudre au moins l'un des inconvénients précités.

En particulier, un but de la présente invention est de proposer un train de véhicules adapté pour un fonctionnement réversible monotrace, qui est robuste, fiable, et présente des coûts de fabrication et de maintien en conditions opérationnelles réduits.

### EXPOSE DE L'INVENTION

A cette fin, on propose un train de véhicules de transport pour tunnel conforme aux revendications annexées.

Plus précisément, on propose un train de véhicules de transport pour tunnel comprenant au moins deux véhicules, chaque véhicule comprenant un châssis globalement longitudinal et au moins deux essieux montés pivotant sous le châssis à chacune des extrémités du châssis,
dans lequel deux véhicules adjacents, dits premier véhicule et deuxième véhicule, sont reliés entre eux par l'intermédiaire d'un premier système de liaison mécanique couplant les premier et deuxième châssis des premier et deuxième véhicules respectivement, le premier système de liaison comprenant des moyens d'articulation pour former un angle entre le premier châssis et le deuxième châssis,

et dans lequel les premier et deuxième véhicules sont en outre reliés entre eux par un deuxième système de liaison mécanique couplant les essieux adjacents, dit premier et deuxième essieux, des premier et deuxième véhicules respectivement, le deuxième système de liaison mécanique comprenant des moyens d'articulation agencés pour que les premier et deuxième essieux aient des positions angulaires opposées par rapport aux premier et deuxième châssis respectivement.

Des aspects préférés mais non limitatifs de ce train de véhicules, pris seuls ou en combinaison, sont les suivants :
- chaque essieu comprend un corps longitudinal monté pivotant sous le châssis de manière parallèle audit châssis, ledit corps longitudinal portant de part et d'autre de son axe longitudinal au moins une roue, **caractérisé en ce que** le deuxième système de liaison mécanique comprend :
   ○ un premier bras de direction s'étendant dans le prolongement du corps longitudinal du premier essieu, dit premier corps longitudinal, le premier bras de direction ayant une extrémité libre avec un point d'accroche déporté par rapport au plan sagittal (S) passant par le premier corps longitudinal,
   ○ un deuxième bras de direction s'étendant dans le prolongement du corps longitudinal du deuxième essieu, dit deuxième corps longitudinal, le deuxième bras de direction ayant une extrémité libre avec un point d'accroche déporté par rapport au plan sagittal (S) passant par le deuxième corps longitudinal,
   ○ une première tige de transmission pour coupler le premier bras de direction au deuxième essieu, la première tige de transmission ayant des extrémités fixées de manière articulée au point d'accroche du premier bras de direction d'une part, et à l'extrémité du deuxième corps longitudinal à partir de laquelle s'étend le deuxième bras de direction d'autre part, et
   ○ une deuxième tige de transmission pour coupler le deuxième bras de direction au premier essieu, la deuxième tige de transmission ayant des extrémités fixées de manière articulée au point d'accroche du deuxième bras de direction d'une part, et à l'extrémité du premier corps longitudinal à partir de laquelle s'étend le premier bras de direction d'autre part.
- le train de véhicules de transport comprend :
   ○ des premiers moyens de fixation entre la première tige de transmission, respectivement deuxième tige de transmission, et le point d'accroche du premier bras de direction, respectivement deuxième bras de direction, prévus pour permettre une rotation au moins selon un axe parallèle à l'axe de rotation du premier essieu, respectivement deuxième essieu, par rapport au premier châssis, respectivement deuxième châssis, et
   ○ des deuxièmes moyens de fixation entre la première tige de transmission, respectivement deuxième tige de transmission, et l'extrémité du premier corps longitudinal, respectivement deuxième corps longitudinal, prévus pour permettre une rotation au moins selon un axe parallèle à l'axe de rotation du deuxième essieu, respectivement premier essieu, par rapport au deuxième châssis, respectivement premier châssis.
- les premiers moyens de fixation forment une liaison rotule entre la première tige de transmission, respectivement deuxième tige de transmission, et le point d'accroche du premier bras de direction, respectivement deuxième bras de direction, et les deuxièmes moyens de fixation forment une liaison rotule entre la première tige de transmission, respectivement deuxième tige de transmission, et l'extrémité du premier corps longitudinal, respectivement deuxième corps longitudinal.
- le premier bras de direction, respectivement deuxième bras de direction, est monté de manière articulé à l'extrémité du premier corps longitudinal, respectivement deuxième corps longitudinal, selon une liaison pivot autour d'un axe de pivot orthogonal au plan sagittal (S) du premier corps longitudinal, respectivement deuxième corps longitudinal.
- le premier système de liaison mécanique comprend un premier bras de liaison s'étendant dans le prolongement du premier châssis et un deuxième bras de liaison s'étendant dans le prolongement du deuxième châssis, les premier et deuxième bras de liaison ayant une première et deuxième extrémité de couplage respectivement, les première et deuxième extrémités de couplage étant fixées entre elles par l'intermédiaire de moyens d'articulation prévus pour permettre une rotation au moins autour d'un axe de rotation parallèle à l'axe de rotation du premier essieu par rapport au premier châssis.
- le premier bras de liaison, respectivement deuxième bras de liaison, est monté de manière articulé à l'extrémité du premier châssis, respectivement deuxième châssis, selon une liaison pivot autour d'un axe de pivot orthogonal au plan sagittal du premier châssis, respectivement deuxième châssis, et les moyens d'articulation forment une liaison rotule entre les première et deuxième extrémités de couplage.
- le train de véhicules de transport comprend un véhicule de tête et un véhicule de queue placés à chaque extrémité du train de véhicules, le véhicule de tête et le véhicule de queue ayant chacun une extrémité libre non couplée à un véhicule adjacent, un essieu d'entrainement étant monté pivotant sous le châssis respectif du véhicule de tête et du véhicule de queue au niveau de l'extrémité libre, chaque essieu d'entrainement comprenant des moyens débrayables d'entrainement des roues portées par ledit essieu d'entrainement.
- le véhicule de tête et le véhicule de queue comprennent chacun une cabine de conduite pour diriger le train de véhicules dans un sens de déplacement du train de véhicules ou dans l'autre.
- chaque essieu comporte des moyens aptes à faire pivoter les roues portées par ledit essieu depuis une première position verticale lorsque les roues prennent appui sur un sol plat jusqu'à une seconde position inclinée lorsque les roues prennent appui sur le sol concave d'un tunnel ou similaire, lesdites roues s'étendant sur la normale du cercle décrit par le tunnel, et inversement.

### DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :
- la figure 1 est une vue de côté d'un train de véhicules selon l'invention ;
- la figure 2 est une vue de dessus du train de véhicules illustré à la figure 1 ;
- la figure 3 est une vue en perspective illustrant la liaison mécanique entre deux véhicules du train de véhicules de la figure 1 ;
- la figure 4 est une vue de dessus d'un essieu de direction intégrant un système de liaison pour une liaison mécanique selon la figure 3 ;
- la figure 5 est une vue de dessus illustrant la liaison mécanique de la figure 3 ;
- la figure 6 est une vue de dessous illustrant la liaison mécanique de la figure 3 ;
- la figure 7 est une vue de côté illustrant la liaison mécanique de la figure 3 ;
- la figure 8 est une vue de dessus illustrant le fonctionnement de la liaison mécanique selon la figure 3.

### DESCRIPTION DETAILLEE DE L'INVENTION

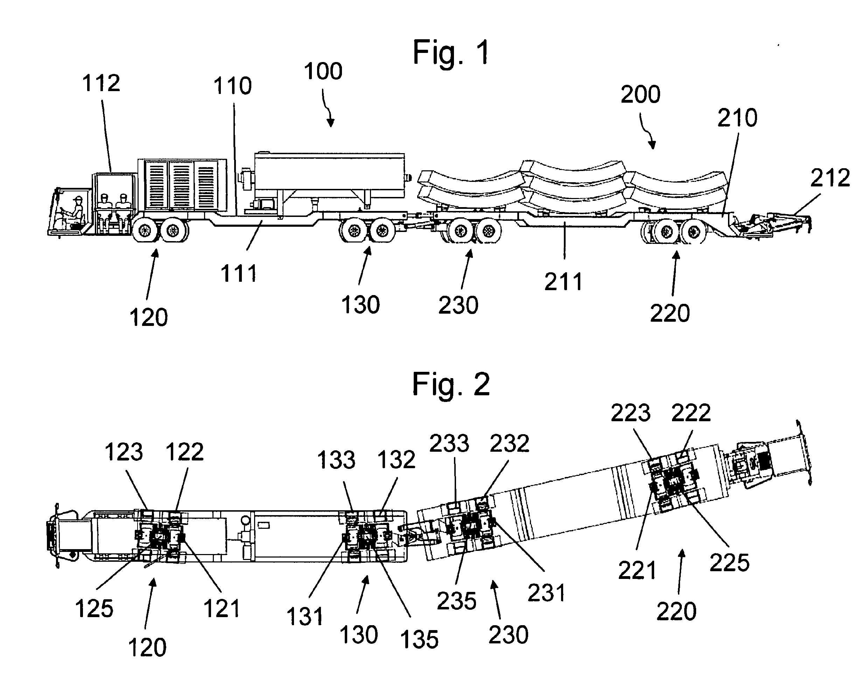

Les figures 1 et 2 illustrent un train de véhicules, plus précisément un train de véhicules sur pneus, utilisé pour le transport de charges dans des zones à fortes contraintes, telles que des tunnels ou des galeries. Un tel train de véhicules est généralement destiné au transport de matériaux ou éléments présentant des volumes importants, notamment de grande longueur, et dont la manutention est particulièrement difficile.

Le train de véhicules présenté aux figures 1 et 2 comprend deux véhicules couplés entre eux par des moyens de liaison, plus précisément une liaison mécanique qui va être décrite en détail plus loin.

Le train de véhicules présenté est de type bicabine, c'est-à-dire que les deux véhicules situés à chacune des deux extrémités du train de véhicules, appelé véhicule de tête et véhicule de queue respectivement, comprennent chacun une cabine de conduite qui permet de diriger le train de véhicules dans un sens de déplacement du train de véhicules ou dans l'autre. Outre une cabine de conduite, le véhicule de tête et le véhicule de queue comprennent chacun des moyens d'entrainement des roues permettant de transmettre aux roues une certaine motricité pour mettre en mouvement le train de véhicules.

Un train de véhicules de type bicabine comprend donc deux véhicules d'entrainement situés aux deux extrémités dudit train de véhicules pour un déplacement dans un sens ou dans un autre. Les trains de véhicules bicabine se distinguent ainsi nettement des trains de véhicules de type « tracteur + remorqueur » pour lesquels seul le véhicule à l'avant du train de véhicules a une fonction d'entrainement.

Les figures et la description qui suivent présentent un train de véhicules bicabine ayant uniquement un véhicule de tête et un véhicule de queue, sans véhicule intermédiaire interposé entre ces deux véhicules d'extrémité. Les enseignements exposés dans ce texte ne sont toutefois pas limités à de tels trains de véhicules bicabine à deux véhicules et sont également applicables à des trains de véhicules bicabine comportant un ou plusieurs véhicules intermédiaires interposés entre le véhicule de tête et le véhicule de queue, l'utilisation de tels véhicules intermédiaires étant notamment privilégiée lorsque l'on souhaite augmenter la charge transportable, ou pour augmenter les points d'articulation du train de véhicules permettant de suivre des courbes encore plus serrées. En particulier, l'enseignement général portant sur la liaison mécanique entre deux véhicules est applicable s'agissant de la liaison entre deux véhicules d'extrémité, entre deux véhicules intermédiaires (appelés également véhicules de direction), ou entre un véhicule d'extrémité et un véhicule intermédiaire.

Le train de véhicules bicabine présenté aux figures 1 et 2 comprend donc deux véhicules d'extrémité (100 ; 200), l'un étant appelé véhicule de tête 100 et l'autre étant appelé véhicule de queue 100.

Chaque véhicule d'extrémité (100 ; 200) comprend un châssis (110 ; 210) globalement longitudinal et au moins deux essieux (120,130 ; 220,230) montés pivotant sous le châssis (110 ; 210) à chacune des extrémités dudit châssis (110 ; 210), chaque essieu portant des roues permettant le déplacement du train de véhicules.

Le châssis (110 ; 210) comprend de préférence une plateforme (111 ; 211) longitudinale prévue pour supporter les charges à transporter. Par ailleurs, le châssis (110 ; 210) de chacun des deux véhicules d'extrémité (100 ; 200) comprend un module de conduite (112 ; 212) permettant de piloter le train de véhicules dans un sens de déplacement ou dans l'autre. De manière préférée, les modules de conduite (112 ; 212) sont agencés aux extrémités libres des châssis (110 ; 210) des véhicules d'extrémité (110 ; 210), notamment dans le prolongement de la plateforme (111 ; 211) de support de charges comme cela est représenté aux figures 1 et 2.

Les essieux (120,130 ; 220,230) sont montés pivotant sous le châssis (110 ; 210) à chacune des extrémités dudit châssis (110 ; 210). II peut également être prévu d'ajouter un ou plusieurs essieux intermédiaires placés entre ces deux essieux d'extrémités. Chaque essieu (120 ; 130 ; 220 ; 230) comprend un corps longitudinal (121 ; 131 ; 221 ; 231) formant une structure longitudinale de fixation des roues. Le corps longitudinal (121 ; 131 ; 221 ; 231) de chaque essieu est monté pivotant sous le châssis (110 ; 210) correspondant de manière parallèle audit châssis, ledit corps longitudinal (121 ; 131 ; 221 ; 231) portant de part et d'autre de son axe longitudinal au moins une roue.

Chaque essieu (120 ; 130 ; 220 ; 230) comprend donc au moins une paire de roues (122 ; 132 ; 222 ; 232) qui sont agencées de part et d'autre du corps longitudinal (121 ; 131 ; 221 ; 231). De préférence, chaque essieu comprend en outre une deuxième paire de roues (123 ; 133 ; 223 ; 233) également agencées de part et d'autre du corps longitudinal (121 ; 131 ; 221 ; 231).

Chaque roue est montée par une liaison pivot sur une fusée, dite fusée de roue, qui est couplée au corps longitudinal par l'intermédiaire d'un bras de fixation (134), ce bras de fixation (134) s'étendant de manière transversale par rapport audit corps longitudinal. De préférence, le bras de fixation et la fusée de roue sont couplés au corps longitudinal de manière à ce que la roue qui leur est associée puisse pivoter selon un axe parallèle à l'axe longitudinal défini par le corps allongé. Une telle configuration permet aux roues de pouvoir être inclinées en fonction de la concavité du sol, ce qui est particulièrement avantageux pour l'utilisation du train de véhicules dans des tunnels où le sol est courbe par exemple.

Pour adapter spécifiquement l'inclinaison des roues au profil du sol, chaque essieu peut en outre comporter des moyens prévus pour faire pivoter les roues portées par ledit essieu depuis une première position verticale lorsque les roues prennent appui sur un sol plat jusqu'à une seconde position inclinée lorsque les roues prennent appui sur le sol concave d'un tunnel ou similaire, lesdites roues s'étendant sur la normale du cercle décrit par le tunnel, et inversement. Un tel pivotement des roues peut être commandé de manière électronique, hydraulique, ou peut même fonctionner sous l'effet du poids de l'ensemble. On peut par exemple se référer à la demande PCT publiée le 1er avril 2010 sous la référence WO 2010/034767 pour un descriptif plus détaillé d'un agencement sur un essieu de roues inclinables sous l'effet du poids du dispositif.

Comme on l'a indiqué plus haut, chaque essieu (120 ; 130 ; 220 ; 230) est monté en rotation par rapport au châssis (100 ; 200) correspondant. A cette fin, le corps longitudinal (121 ; 131 ; 221 ; 231) est couplé au châssis (100 ; 200) par l'intermédiaire d'un axe de couplage (125 ; 135 ; 225 ; 235) de sorte que l'essieu a une fonction de direction dans le déplacement du train de véhicules. En effet, chaque essieu (120 ; 130 ; 220 ; 230) peut avoir une position angulaire spécifique par rapport au châssis (100 ; 200) correspondant participant ainsi au déplacement monotrace du train de véhicules. Un tel essieu pouvant pivoter par rapport au châssis est qualifié d'essieu de direction puisqu'il participe au suivi de la trajectoire monotrace.

Parmi les au moins deux essieux (120,130; 220,230) de chaque véhicule d'extrémité (100 ; 200), l'un d'eux au moins est un essieu d'entrainement (120 ; 220), c'est-à-dire un essieu de direction qui porte au moins une roue motrice permettant de mettre en mouvement ledit véhicule d'extrémité (100 ; 200).

Chaque essieu d'entrainement (120 ; 220) comprend donc au moins une roue motrice pouvant être mise en mouvement par des moyens d'entrainement adaptés, lesdits moyens d'entrainement étant par exemple un moteur électrique ou un moteur hydraulique alimenté par une pompe hydraulique.

Les moyens d'entrainement sont de préférence débrayables ce qui permet de désactiver la roue motrice de l'essieu d'entrainement (120 ; 220) et la transformer en roue libre, transformant ainsi l'essieu d'entrainement (120 ; 220) en un simple essieu de direction. De manière générale, seul l'un des deux véhicules d'extrémité (100 ; 200) exerce réellement une fonction d'entrainement (ce véhicule étant le véhicule d'extrémité placé à l'avant du train de véhicules dans le sens de déplacement) avec des moyens d'entrainement activés pour mettre en mouvement la au moins une roue motrice de l'essieu d'entrainement. Dans ce cas, les moyens d'entrainement de l'essieu d'entrainement de l'autre véhicule d'extrémité sont débrayés, les roues fonctionnant ainsi en roue libre, et le véhicule d'extrémité correspondant se comportant donc comme un véhicule suiveur tracté par le véhicule d'extrémité avant.

De préférence encore, un essieu d'entrainement (120 ; 220) comprend deux roues motrices actionnées par les moyens d'entrainement. Dans le cas où l'essieu d'entrainement comprend quatre roues, il peut être envisagé que seules deux des quatre roues soient motrices, les deux autres roues étant laissées libres. Dans ce dernier cas, les deux roues motrices sont placées de part et d'autre du corps longitudinal de l'essieu, ces deux roues motrices pouvant être placées en regard l'une de l'autre, ou pouvant alternativement être placées selon une configuration diagonale où chaque roue motrice fait face à une roue libre.

Selon un mode de réalisation particulier, tous les véhicules du train de véhicules, y compris les véhicules intermédiaires le cas échéant, comprennent au moins un essieu d'entrainement tel que défini ci-dessus. Selon un exemple spécifique de ce mode de réalisation, tous les essieux des véhicules du train de véhicules sont des essieux d'entrainement comprenant des moyens d'entrainement d'au moins une roue motrice.

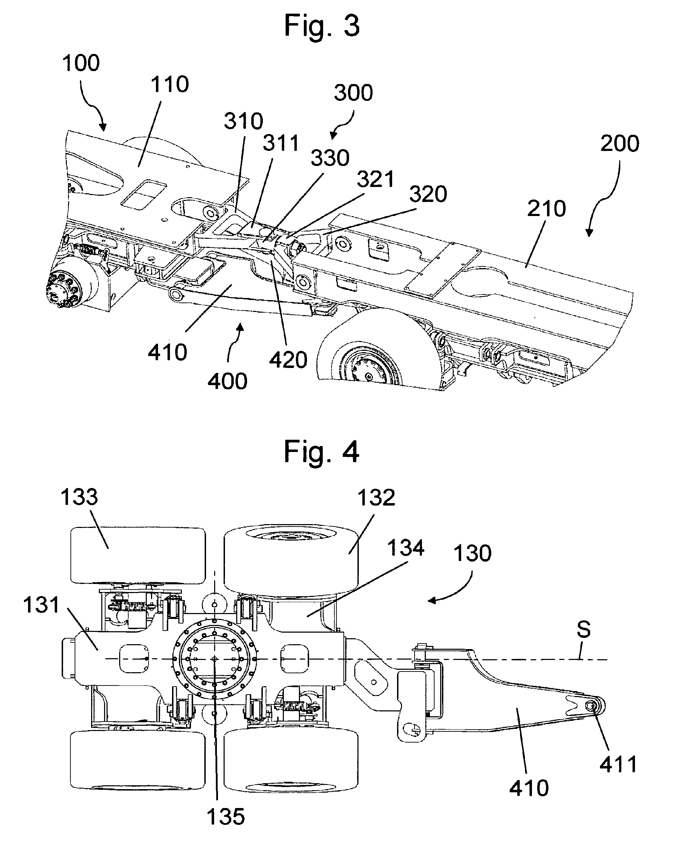

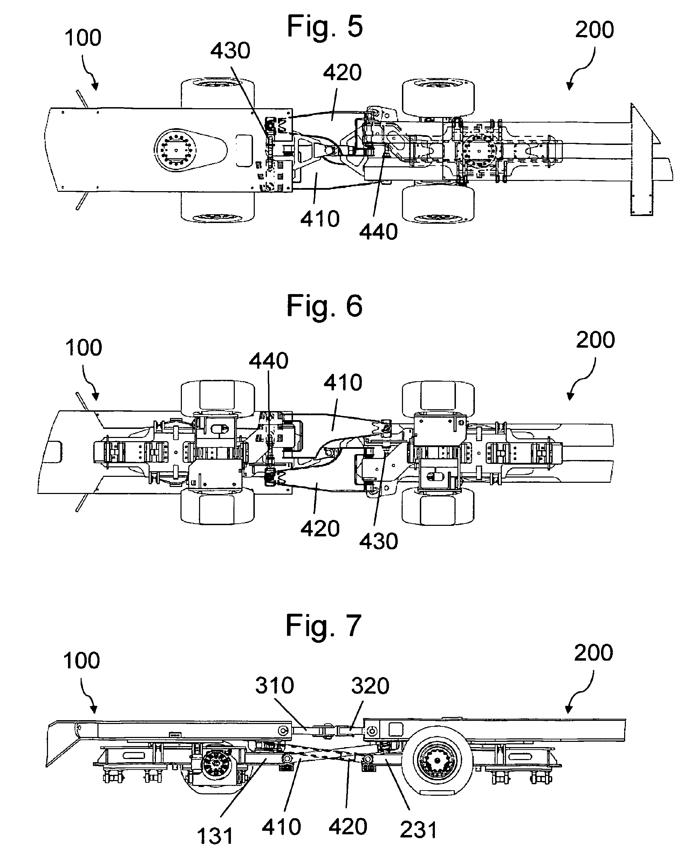

Les figures 3 à 8 illustrent la liaison mécanique particulière proposée pour relier les différents véhicules du train de véhicules, que ce soit pour relier deux véhicules d'extrémité entre eux, deux véhicules intermédiaires entre eux, ou entre un véhicule d'extrémité et un véhicule intermédiaire.

La liaison mécanique décrite ci-dessous permet de faciliter le passage du train de véhicules selon des trajectoires à faibles rayons de courbure longitudinaux, et est particulièrement avantageuse lorsque les véhicules ont des châssis avec des longueurs importants pour pouvoir transporter des éléments de grandes dimensions. En effet, dans ce dernier cas, la grande longueur des plateformes oblige dans la conception à éloigner les essieux d'un même véhicule, ce qui rend particulièrement difficile le suivi de trajectoire, notamment les manoeuvres et les passages de faibles rayons de courbure longitudinaux.

Ainsi, la liaison mécanique proposée pour relier deux véhicules adjacents, tels que le véhicule de tête 100 et le véhicule de queue 200 dans le mode de réalisation illustré aux figures, comprend deux systèmes de liaison mécaniques combinés, à savoir un premier système de liaison mécanique 300 couplant le châssis 110 du véhicule de tête 100 au châssis 210 du véhicule de queue 200, et un deuxième système de liaison mécanique 400 couplant les deux essieux adjacents du véhicule de tête 100 et du véhicule de queue 200 respectivement, c'est-à-dire les deux essieux (130 ; 230) placés au niveau des extrémités des châssis des véhicules de tête et de queue qui sont couplées entre elles.

Le premier système de liaison mécanique 300 comprend des moyens d'articulation permettant de former un angle entre le châssis 110 du véhicule de tête 100 et le châssis 210 du véhicule de queue 200. Ce système de liaison mécanique 300 est en outre adapté pour assurer la traction entre les véhicules, en particulier, la traction du véhicule de tête 100 sur le véhicule de queue 200 lorsque ledit véhicule de tête 100 est utilisé comme véhicule d'entrainement avant.

Selon un mode de réalisation particulier, le premier système de liaison mécanique 300 comprend un premier bras de liaison 310 s'étendant dans le prolongement du châssis 110 du véhicule de tête 100 et un deuxième bras de liaison 320 s'étendant dans le prolongement du châssis 210 du véhicule de queue 200.

Ces premier et deuxième bras de liaison (310 ; 320) ont chacun une extrémité de couplage (311 ; 321), ces extrémité de couplage (311 ; 321) étant destinées à être fixées entre elles par l'intermédiaire de moyens d'articulation 330 prévus pour permettre une rotation au moins autour d'un axe de rotation parallèle à l'axe de rotation des essieux par rapport à leur châssis respectif.

Selon un premier mode de réalisation, les moyens d'articulation 330 forment une liaison pivot entre les premier et deuxième bras de liaison (310 ; 320) selon un axe de rotation parallèle à l'axe de rotation des essieux par rapport à leur châssis respectif.

Selon un autre mode de réalisation, les premier et deuxième bras de liaison (310 ; 320) sont montés de manière articulée sur le châssis des véhicules de tête et de queue respectivement. Plus précisément, chaque bras de liaison (310 ; 320) est monté selon une liaison pivot formée autour d'un axe de pivot orthogonal au plan sagittal du châssis (110 ; 210) sur lequel il est monté, c'est-à-dire selon un axe de pivot orthogonal à l'axe longitudinal du châssis et parallèle au plan moyen du châssis. Dans ce cas, les moyens d'articulation 330 comprennent des organes de couplage agencés pour former une liaison rotule entre les première et deuxième extrémités de couplage (311 ; 321). Un tel agencement des bras de liaison (310 ; 320) est particulièrement avantageux puisqu'il permet à deux véhicules adjacents d'être décalés verticalement (c'est-à-dire selon un axe parallèle à l'axe de rotation des essieux par rapport au châssis). Ce degré de liberté entre deux véhicules adjacents permet au train de véhicules d'accepter les irrégularités du sol, tels que des passages de marche, des changements de pente, etc.

Le deuxième système de liaison mécanique 400 relie deux essieux adjacents de deux véhicules adjacents et comprend des organes de couplage prévus pour que l'un des deux essieux adjacents ait son orientation par rapport au châssis sur lequel il est fixé recopiée sur l'orientation de l'autre des deux essieux adjacents par rapport au châssis sur lequel il est fixé, et inversement.

Plus précisément, le deuxième système de liaison mécanique 400 comprend des moyens agencés pour que les deux essieux adjacents aient des positions angulaires opposées par rapport à leur châssis respectif. A cet égard, la position angulaire d'un essieu par rapport au châssis sur lequel il est monté est définie par l'angle orienté le plus petit entre l'axe longitudinal du châssis longitudinal et l'axe longitudinal du corps longitudinal de l'essieu.

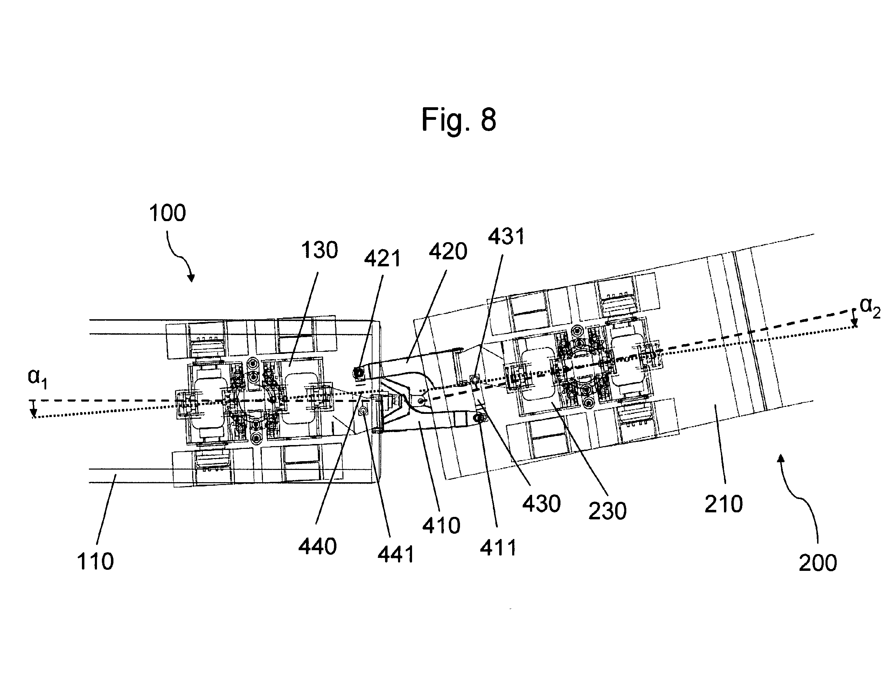

En référence à la figure 8, la position angulaire de l'essieu 130 du véhicule de tête 100 par rapport au châssis 110 est définie par l'angle noté α1, et la position angulaire de l'essieu 230 du véhicule de queue 200 par rapport au châssis 210 est définie par l'angle noté α2. Les organes de couplage du deuxième système de liaison mécanique 400 relient les deux essieux adjacents (130 ; 230) de telle sorte que les positions angulaires de ces essieux adjacents (130 ; 230) par rapport à leur châssis (110 ; 210) respectif soient définies par des angles α1 et α2 opposés, c'est-à-dire α2 = - α1.

Ainsi, les roues portées par les essieux (130 ; 230) décrivent une courbe d'un rayon sensiblement identique.

Le fait que l'orientation d'un essieu par rapport à son châssis soit recopiée sur l'autre essieu par rapport à son châssis confère aux deux véhicules adjacents un agencement symétrique. Plus précisément, si l'on note (P) le plan de symétrie entre les châssis (110 ; 210) des deux véhicules, alors le deuxième système de liaison reliant les deux essieux adjacents (130 ; 230) des deux véhicules adjacents (100 ; 200) implique que le positionnement des deux essieux adjacents par rapport à leur châssis respectif est également symétrique par rapport au plan (P).

Le deuxième système de liaison mécanique 400 reliant ainsi les deux essieux adjacents (130 ; 230) de deux véhicules adjacents (100 ; 200) permet de « casser » l'angle entre les deux châssis (110 ; 210) des deux véhicules adjacents (100 ; 200), c'est-à-dire que la rotation et l'orientation symétrique des essieux adjacents (130 ; 230) par rapport à leur châssis (110 ; 210) respectif renforce la prise d'angle pour le suivi de trajectoire par les deux véhicules adjacents (100 ; 200).

Le deuxième système de liaison mécanique 400 comprend de préférence des éléments agencés de manière symétrique sur chacun des deux essieux adjacents (130 ; 230) pour assurer la recopie angulaire exposée plus haut, de manière réversible, c'est-à-dire que le repositionnement d'un essieu par rapport à son châssis entraine le repositionnement de l'autre essieu par rapport à son châssis et inversement.

Selon un mode de réalisation particulier, les organes de couplage du deuxième système de liaison mécanique comprennent deux bras de direction (410 ; 420) et deux tiges de transmission (430 ; 440) agencés entre les deux essieux adjacents (130 ; 230) pour assurer la recopie angulaire décrite.

Ainsi, les bras de direction (410 ; 420) s'étendent dans le prolongement du corps longitudinal (131 ; 231) des essieux (130 ; 230) comme cela est représenté à la figure 4. Le bras de direction (410 ; 420) est agencé par rapport à l'essieu (130 ; 230) auquel il est couplé de sorte que son extrémité libre a un point d'accroche (411 ; 421) déporté par rapport au plan sagittal (S) passant corps longitudinal (131 ; 231) de l'essieu (130 ; 230).

Les deux tiges de transmission (430 ; 440) sont prévues pour coupler l'extrémité libre d'un bras de direction à l'essieu auquel le bras de direction n'est pas encore couplé. Ainsi chaque tige de transmission (430 ; 440) a des extrémités fixées de manière articulée au point d'accroche (411 ; 421) d'un bras de direction (410 ; 420) d'une part, et à l'extrémité du corps longitudinal (231 ; 131) à partir de laquelle s'étend l'autre bras de direction (420 ; 410) d'autre part.

Le deuxième système de liaison mécanique comprend par ailleurs des moyens de fixation entre chaque tige de transmission et le point d'accroche du bras de direction associé qui sont adaptés pour permettre une rotation au moins selon un axe parallèle à l'axe de rotation des essieux par rapport aux châssis. Il comprend d'autres moyens de fixation entre chaque tige de transmission et l'extrémité du corps longitudinal auquel la tige est couplée qui sont adaptés pour permettre une rotation au moins selon un axe parallèle à l'axe de rotation des essieux par rapport aux châssis. Ainsi, la rotation d'un essieu par rapport au châssis auquel il est fixé entraine la rotation de l'essieu adjacent par rapport à son châssis, par transmission mécanique du mouvement de rotation grâce à l'agencement particulier des bras de direction (410 ; 420) et des tiges de transmission (430 ; 440).

Selon une première configuration, les moyens de fixation sont prévus pour former des liaisons pivot selon un axe de rotation parallèle à l'axe de rotation des essieux par rapport à leur châssis respectif.

Selon une autre configuration, les moyens de fixation forment des liaisons rotule entre chacune des pièces. Une telle configuration avec des liaisons rotule est particulièrement avantageuse pour favoriser les mouvements relatifs entre les deux véhicules permettant l'absorption des chocs transmis par le sol.

En particulier, cette dernière configuration est particulièrement avantageuse lorsque les organes de couplage du deuxième système de liaison sont montés articulés par rapport aux essieux, notamment lorsque les bras de transmission (410 ; 420) sont montés de manière articulée à l'extrémité du corps longitudinal (131 ; 231) de l'essieu (130 ; 230) correspondant. Plus précisément, dans ce cas chaque bras de transmission (410 ; 420) est monté selon une liaison pivot formée autour d'un axe de pivot orthogonal au plan sagittal (S) du corps longitudinal (131 ; 231) de l'essieu (130 ; 230) sur lequel il est monté, c'est-à-dire selon un axe de pivot orthogonal à l'axe longitudinal du corps longitudinal et parallèle au plan moyen dudit corps longitudinal. Un tel agencement des bras de transmission (410 ; 420) est particulièrement avantageux puisqu'il permet à deux véhicules adjacents d'être décalés verticalement (c'est-à-dire selon un axe parallèle à l'axe de rotation des essieux par rapport au châssis). Ce degré de liberté entre deux véhicules adjacents permet au train de véhicules d'accepter les irrégularités du sol, tels que des passages de marche, des changements de pente, etc.

La liaison mécanique proposée pour relier deux véhicules adjacents (également appelée liaison inter modules) est particulièrement avantageuse puisque, outre le fait d'assurer la traction entre les véhicules, elle favorise la prise d'angle entre deux véhicules adjacents pour améliorer le déplacement monotrace du train de véhicules, notamment lorsque les véhicules sont longs. Ainsi cette liaison mécanique permet aux différents essieux des véhicules du train de véhicules de suivre une trajectoire identique à l'essieu menant. Il est à noter qu'en général, le dernier essieu du dernier véhicule dans le sens de déplacement du train de véhicules est laissé libre en rotation ; il peut toutefois également être maintenu en position fixe avec les roues parallèles à l'axe longitudinal du châssis, voire être asservi en rotation.

La liaison inter module permet également d'assurer une recopie mécanique des positions angulaires des essieux adjacents par rapport à leur châssis, ce qui est particulièrement avantageux par rapport aux systèmes de l'art antérieur où l'éventuelle recopie angulaire est commandée électroniquement et mise en oeuvre généralement par des vérins hydrauliques. La liaison mécanique ne présente donc pas la complexité associée à la commande électronique. Par ailleurs, la liaison mécanique simplifie la réversibilité du train de véhicules. En particulier, lorsque le sens de déplacement du train de véhicules doit être changé, il ne nécessite aucune remise en position du vérin hydraulique, aucun recentrage, nécessaire dans l'art antérieur à commande électronique, notamment pour pouvoir repartir en position centrale et ne pas avoir de problème de parallélisme sur l'essieu suiveur.

## Revendications

1. Train de véhicules de transport pour tunnel comprenant au moins deux véhicules (100 ; 200), chaque véhicule (100; 200) comprenant un châssis (110; 210) globalement longitudinal et au moins deux essieux (120,130 ; 220, 230) montés pivotant sous le châssis (110; 210) à chacune des extrémités du châssis, dans lequel deux véhicules adjacents (100 ; 200), dits premier véhicule (100) et deuxième véhicule (200), sont reliés entre eux par l'intermédiaire de moyens de liaison, **caractérisé en ce que** les moyens de liaison comprennent :
- un premier système de liaison mécanique (300) couplant les premier et deuxième châssis (110 ; 210) des premier et deuxième véhicules (100 ; 200) respectivement, le premier système de liaison mécanique (300) comprenant des moyens d'articulation pour former un angle entre le premier châssis (110) et le deuxième châssis (210), et
- un deuxième système de liaison mécanique (400) couplant les essieux adjacents (130 ; 230), dit premier et deuxième essieux, des premier et deuxième véhicules (100; 200) respectivement, le deuxième système de liaison mécanique (400) comprenant des moyens d'articulation agencés pour que les premier et deuxième essieux (130; 230) aient des positions angulaires opposées par rapport aux premier et deuxième châssis (110 ; 210) respectivement.

2. Train de véhicules de transport selon la revendication 1, dans lequel chaque essieu (130; 230) comprend un corps longitudinal (131 ; 231) monté pivotant sous le châssis (110 ; 210) de manière parallèle audit châssis, ledit corps longitudinal (131 ; 231) portant de part et d'autre de son axe longitudinal au moins une roue, **caractérisé en ce que** le deuxième système de liaison mécanique (400) comprend :
- un premier bras de direction (410) s'étendant dans le prolongement du corps longitudinal (131) du premier essieu (130), dit premier corps longitudinal, le premier bras de direction (410) ayant une extrémité libre avec un point d'accroche (411) déporté par rapport au plan sagittal (S) passant par le premier corps longitudinal (131),
- un deuxième bras de direction (420) s'étendant dans le prolongement du corps longitudinal (231) du deuxième essieu (230), dit deuxième corps longitudinal, le deuxième bras de direction (420) ayant une extrémité libre avec un point d'accroche (421) déporté par rapport au plan sagittal (S) passant par le deuxième corps longitudinal (231),
- une première tige de transmission (430) pour coupler le premier bras de direction (410) au deuxième essieu (230), la première tige de transmission (430) ayant des extrémités fixées de manière articulée au point d'accroche (411) du premier bras de direction (410) d'une part, et à l'extrémité du deuxième corps longitudinal (231) à partir de laquelle s'étend le deuxième bras de direction (420) d'autre part, et
- une deuxième tige de transmission (440) pour coupler le deuxième bras de direction (420) au premier essieu (130), la deuxième tige de transmission (440) ayant des extrémités fixées de manière articulée au point d'accroche (421) du deuxième bras de direction (420) d'une part, et à l'extrémité du premier corps longitudinal (131) à partir de laquelle s'étend le premier bras de direction (410) d'autre part.

3. Train de véhicules de transport selon la revendication 2, comprenant :
- des premiers moyens de fixation entre la première tige de transmission (430), respectivement deuxième tige de transmission (440), et le point d'accroche du premier bras de direction (410), respectivement deuxième bras de direction (420), prévus pour permettre une rotation au moins selon un axe parallèle à l'axe de rotation du premier essieu (130), respectivement deuxième essieu (230), par rapport au premier châssis (110), respectivement deuxième châssis (210), et
- des deuxièmes moyens de fixation entre la première tige de transmission (430), respectivement deuxième tige de transmission (440), et l'extrémité du premier corps longitudinal (131), respectivement deuxième corps longitudinal (231), prévus pour permettre une rotation au moins selon un axe parallèle à l'axe de rotation du deuxième essieu (230), respectivement premier essieu (130), par rapport au deuxième châssis (210), respectivement premier châssis (110).

4. Train de véhicules de transport selon la revendication 3, dans lequel :
- les premiers moyens de fixation forment une liaison rotule entre la première tige de transmission (430), respectivement deuxième tige de transmission (440), et le point d'accroche du premier bras de direction (410), respectivement deuxième bras de direction (420), et
- les deuxièmes moyens de fixation forment une liaison rotule entre la première tige de transmission (430), respectivement deuxième tige de transmission (440), et l'extrémité du premier corps longitudinal (131), respectivement deuxième corps longitudinal (231).

5. Train de véhicules de transport selon l'une quelconque des revendications 2 à 4, dans lequel le premier bras de direction (410), respectivement deuxième bras de direction (420), est monté de manière articulé à l'extrémité du premier corps longitudinal (131), respectivement deuxième corps longitudinal (231), selon une liaison pivot autour d'un axe de pivot orthogonal au plan sagittal (S) du premier corps longitudinal (131), respectivement deuxième corps longitudinal (231).

6. Train de véhicules de transport selon l'une quelconque des revendications 1 à 5, dans lequel le premier système de liaison mécanique (300) comprend un premier bras de liaison (310) s'étendant dans le prolongement du premier châssis (110) et un deuxième bras de liaison (320) s'étendant dans le prolongement du deuxième châssis (210), les premier (310) et deuxième (320) bras de liaison ayant une première (311) et deuxième (321) extrémité de couplage respectivement, les première (311) et deuxième (321) extrémités de couplage étant fixées entre elles par l'intermédiaire de moyens d'articulation (330) prévus pour permettre une rotation au moins autour d'un axe de rotation parallèle à l'axe de rotation du premier essieu (130) par rapport au premier châssis (110).

7. Train de véhicules de transport selon la revendication 6, dans lequel le premier bras de liaison (310), respectivement deuxième bras de liaison (320), est monté de manière articulé à l'extrémité du premier châssis (110), respectivement deuxième châssis (210), selon une liaison pivot autour d'un axe de pivot orthogonal au plan sagittal du premier châssis (110), respectivement deuxième châssis (210), et les moyens d'articulation (330) forment une liaison rotule entre les première (311) et deuxième (321) extrémités de couplage.

8. Train de véhicules de transport selon l'une quelconque des revendications 1 à 7, comprenant un véhicule de tête (100) et un véhicule de queue (200) placés à chaque extrémité du train de véhicules, le véhicule de tête (100) et le véhicule de queue (200) ayant chacun une extrémité libre non couplée à un véhicule adjacent, un essieu d'entrainement (120 ; 220) étant monté pivotant sous le châssis (110 ; 210) respectif du véhicule de tête (100) et du véhicule de queue (200) au niveau de l'extrémité libre, chaque essieu d'entrainement (120 ; 220) comprenant des moyens débrayables d'entrainement des roues portées par ledit essieu d'entrainement (120 ; 220).

9. Train de véhicules selon la revendication 8, dans lequel le véhicule de tête (100) et le véhicule de queue (200) comprennent chacun une cabine de conduite pour diriger le train de véhicules dans un sens de déplacement du train de véhicules ou dans l'autre.

10. Train de véhicules de transport selon l'une quelconque des revendications 1 à 9, dans lequel chaque essieu (120 ; 130 ; 220 ; 230) comporte des moyens aptes à faire pivoter les roues portées par ledit essieu (120 ; 130 ; 220 ; 230) depuis une première position verticale lorsque les roues prennent appui sur un sol plat jusqu'à une seconde position inclinée lorsque les roues prennent appui sur le sol concave d'un tunnel ou similaire, lesdites roues s'étendant sur la normale du cercle décrit par le tunnel, et inversement.

## Patentansprüche

1. Zug von Transportfahrzeugen für Tunnel, wobei der Zug mindestens zwei Fahrzeuge (100;200) aufweist, die jeweils ein allgemein längliches Fahrgestell (110;220) und mindestens zwei Radachsen (120,130;220,230) aufweisen, die an jedem Ende des Fahrgestells unterhalb des Fahrgestells (110;220) drehbar angebracht sind, wobei zwei benachbarte Fahrzeuge (100;200), genannt erstes Fahrzeug (100) und zweites Fahrzeug (200), mit Hilfe von Verbindungseinrichtungen miteinander verbunden sind, **dadurch gekennzeichnet, dass** die Verbindungseinrichtungen aufweisen:
- ein erstes mechanisches Verbindungssystem (300), das das erste und zweite Fahrgestell (110;210) des ersten bzw. zweiten Fahrzeugs (100;200) koppelt, wobei das erste mechanische Verbindungssystem (300) Gelenkeinrichtungen aufweist, um einen Winkel zwischen dem ersten Fahrgestell (110) und dem zweiten Fahrgestell (210) zu bilden, und
- ein zweites mechanisches Verbindungssystem (400), das die benachbarten Radachsen (130;230), genannt erste und zweite Radachse, des ersten bzw. zweiten Fahrzeugs (100;200) koppelt, wobei das zweite mechanische Verbindungssystem (400) Gelenkeinrichtungen aufweist, die so konfiguriert sind, dass die erste und zweite Radachse (130;230) jeweils entgegengesetzte Winkelpositionen bezüglich des ersten und zweiten Fahrgestells (110;210) bilden.

2. Zug von Transportfahrzeugen nach Anspruch 1, in welchem jede Radachse (130;230) einen Längskörper (131;231) aufweist, der drehbar unterhalb des Fahrgestells (110;210) parallel zum Fahrgestell angebracht ist, wobei der Längskörper (131:231) beiderseits seiner Längsachse mindestens ein Rad trägt, **dadurch gekennzeichnet, dass** des zweite mechanische Verbindungssystem (400) aufweist:
- einen ersten Richtungsarm (410), der sich in der Verlängerung des Längskörpers (131) der ersten Radachse (130), genannt erster Längskörper, erstreckt, wobei der erste Richtungsarm (410) ein freies Ende mit einem Anhängepunkt (411) aufweist, der seitlich versetzt bezüglich der durch den ersten Längskörper (131) hindurchgehenden Sagittalebene (S) angeordnet ist,
- einen zweiten Richtungsarm (420), der sich in der Verlängerung des Längskörpers (231) der zweiten Radachse (230), genannt zweiter Längskörper, erstreckt, wobei der zweite Richtungsarm (420) ein freies Ende mit einem Anhängepunkt (421) aufweist, der seitlich versetzt bezüglich der durch den zweiten Längskörper (231) hindurchgehenden Sagittalebene (S) angeordnet ist,
- eine erste Kraftübertragungsstange (430) zum Koppeln des ersten Richtungsarms (410) mit der zweiten Radachse (230), wobei die erste Kraftübertragungsstange (430) Enden aufweist, die gelenkig verbunden sind einerseits mit dem Anhängepunkt (411) des ersten Richtungsarms (410) und andererseits mit demjenigen Ende des zweiten Längskörpers (231), von welchem aus sich der zweite Richtungsarm (420) erstreckt, und
- eine zweite Kraftübertragungsstange (440) zum Koppeln des zweiten Richtungsarms (420) mit der ersten Radachse (130), wobei die zweite Kraftübertragungsstange (440) Enden aufweist, die gelenkig verbunden sind einerseits mit dem Anhängepunkt (421) des zweiten Richtungsarms (420) und andererseits mit demjenigen Ende des ersten Längskörpers (131), von welchem aus sich der erste Richtungsarm (410) erstreckt.

3. Zug von Transportfahrzeugen nach Anspruch 2, mit:
- ersten Befestigungseinrichtungen zwischen der ersten Kraftübertragungsstange (430) bzw. zweiten Kraftübertragungsstange (440) und dem Anhängepunkt des ersten Richtungsarms (410) bzw. zweiten Richtungsarms (420), wobei diese Einrichtungen konfiguriert sind, eine Drehung zumindest um eine Achse, die parallel zur Drehachse der ersten Radachse (130) bzw. zweiten Radachse (230) ist, bezüglich des ersten Fahrgestells (110) bzw. zweiten Fahrgestells (210) zu erlauben, und
- zweiten Befestigungseinrichtungen zwischen der ersten Kraftübertragungsstange (430) bzw. zweiten Kraftübertragungsstange (440) und dem Ende des ersten Längskörpers (131) bzw. zweiten Längskörpers (231), wobei diese Einrichtungen konfiguriert sind, eine Drehung zumindest um eine Achse, die parallel zur Drehachse der zweiten Radachse (230) bzw. ersten Radachse (130) ist, bezüglich des zweiten Fahrgestells (210) bzw. ersten Fahrgestells (110) zu erlauben.

4. Zug von Transportfahrzeugen nach Anspruch 3, in welchem
- die ersten Befestigungseinrichtungen eine Kugelgelenkverbindung zwischen der ersten Kraftübertragungsstange (430) bzw. zweiten Kraftübertragungsstange (440) und dem Anhängepunkt des ersten Richtungsarms (410) bzw. zweiten Richtungsarms (420) bilden, und
- die zweiten Befestigungseinrichtungen eine Kugelgelenkverbindung zwischen der ersten Kraftübertragungsstange (430) bzw. zweiten Kraftübertragungsstange (440) und dem Ende des ersten Längskörpers (131) bzw. zweiten Längskörpers (231) bilden.

5. Zug von Transportfahrzeugen nach einem der Ansprüche 2 bis 4, in welchem der erste Richtungsarm (410) bzw. zweite Richtungsarm (420) gelenkig mit dem Ende des ersten Längskörpers (131) bzw. zweiten Längskörpers (231) verbunden ist gemäß einer Drehverbindung um eine Drehachse, die orthogonal zur Sagittalebene (S) des ersten Längskörpers (131) bzw. zweiten Längskörpers (231) ist.

6. Zug von Transportfahrzeugen nach einem der Ansprüche 1 bis 5, in welchem das erste mechanische Verbindungssystem (300) einen in der Verlängerung des ersten Fahrgestells (110) sich erstreckenden ersten Verbindungsarm (310) und einen in der Verlängerung des zweiten Fahrgestells (210) sich erstreckenden zweiten Verbindungsarm (320) aufweist, wobei der erste (310) und zweite (320) Verbindungsarm ein erstes (311) bzw. zweites (321) Kopplungsende aufweisen, wobei das erste (311) und zweite (321) Kopplungsende mit Hilfe von Gelenkverbindungseinrichtungen miteinander verbunden sind, die konfiguriert sind, eine Drehung zumindest um eine Drehachse zu erlauben, die parallel ist zur Achse der Drehung der ersten Radachse (130) bezüglich des ersten Fahrgestells (110).

7. Zug von Transportfahrzeugen nach Anspruch 6, in welchem der erste Verbindungsarm (310) bzw. zweite Verbindungsarm (320) gelenkig mit dem Ende des ersten Fahrgestells (110) bzw. zweiten Fahrgestells (210) verbunden sind gemäß einer Drehverbindung um eine Drehachse, die orthogonal zur Sagittalebene des ersten Fahrgestells (110) bzw. zweiten Fahrgestells (210) ist, und die Gelenkverbindungseinrichtungen (330) eine Kugelgelenkverbindung zwischen dem ersten (311) und zweiten (321) Kopplungsende bilden.

8. Zug von Transportfahrzeugen nach einem der Ansprüche 1 bis 7, der ein Kopffahrzeug (100) und ein Schwanzfahrzeug (200) aufweist, die jeweils an einem Ende des Transportfahrzeugzugs angeordnet sind, wobei das Kopffahrzeug (100) und das Schwanzfahrzeug (200) jeweils ein freies Ende haben, das an kein benachbartes Fahrzeug gekoppelt ist, wobei unterhalb des jeweiligen Fahrgestells (110;210) des Kopffahrzeugs (100) bzw. des Schwanzfahrzeugs (200) im Bereich des freien Endes eine Antriebsachse (120;220) drehbar angebracht ist, wobei jede Antriebsachse (120;220) ausrückbare Antriebseinrichtungen zum Antreiben der von dieser Antriebsachse (120;220) getragenen Räder aufweist.

9. Zug von Transportfahrzeugen nach Anspruch 8, in welchem das Kopffahrzeug (100) und das Schwanzfahrzeug (200) jeweils eine Führerkabine zum Führen des Fahrzeugzugs in die eine oder die andere Fortbewegungsrichtung des Fahrzeugzugs tragen.

10. Zug von Transportfahrzeugen nach einem der Ansprüche 1 bis 9, in welchem jede Radachse (120;130;220;230) Einrichtungen aufweist, die fähig sind, die von dieser Radachse (120;130;220;230) getragenen Räder aus einer ersten vertikalen Position, wenn die Räder auf einem ebenen Boden zur Auflage kommen, in eine zweite geneigte Position, wenn die Räder auf einem konkaven Boden eines Tunnels oder dergleichen zur Auflage kommen, zu drehen und umgekehrt, wobei sich die Räder auf der Normalen des von dem Tunnel beschriebenen Kreises erstrecken.

## Claims

1. A train of transport vehicles for a tunnel comprising at least two vehicles (100; 200), each vehicle (100; 200) comprising a globally longitudinal chassis (110; 210) and at least two axles (120, 130; 220, 330) pivotally mounted under the chassis (110; 210) at each of the ends of the chassis, wherein two adjacent vehicles (100; 200), so-called first vehicle (100) and second vehicle (200), are connected together via connecting means, **characterized in that** the connecting means comprise:
- a first mechanical connection system (300) coupling the first and second chassis (110; 210) of the first and second vehicles (100; 200) respectively, the first mechanical connection system (300) comprising articulating means in order to form an angle between the first chassis (110) and the second chassis (210), and
- a second mechanical connection system (400) coupling the adjacent axles (130; 230), so-called first and second axles, of the first and second vehicles (100; 200) respectively, the second mechanical connection system (400) comprising articulating means arranged so that the first and second axles (130; 230) have opposite angular positions relatively to the first and second chassis (110; 210) respectively.

2. The train of transport vehicles according to claim 1, wherein each axle (130; 230) comprises a longitudinal body (131; 231) pivotally mounted under the chassis (110; 210), parallel to said chassis, said longitudinal body (131; 231) bearing on either side of its longitudinal axis at least one wheel, **characterized in that** the second mechanical connection system (400) comprises:
- a first steering arm (410) extending in the extension of the longitudinal body (131) of the first axle (130), so-called first longitudinal body, the first steering arm (410) having a free end with an attachment point (411) offset relatively to the sagittal plane (S) passing through the first longitudinal body (131),
- a second steering arm (420) extending in the extension of the longitudinal body (231) of the second axle (230), so-called second longitudinal body, the second steering arm (420) having a free end with an attachment point (421) offset relatively to the sagittal plane (S) passing through the second longitudinal body (231),
- a first transmission rod (430) for coupling the first steering arm (410) with the second axle (230), the first transmission rod (430) having ends articulately attached to the attachment point (411) of the first steering arm (410) on the one hand, and to the end of the second longitudinal body (231) from which the second steering arm (420) extends on the other hand, and
- a second transmission rod (440) for coupling the second steering arm (420) with the first axle (130), the second transmission rod (440) having ends articulately attached to the attachment point (421) of the second steering arm (420) on the one hand, and to the end of the first longitudinal body (131) from which the first steering arm (410) extends on the other hand.

3. The train of transport vehicles according to claim 2, comprising:
- first attachment means between the first transmission rod (430), respectively the second transmission rod (440), and the attachment point of the first steering arm (410), respectively the second steering arm (420), provided for allowing rotation at least along an axis parallel to the axis of rotation of the first axle (130), respectively the second axle (230), relatively to the first chassis (110), respectively the second chassis (210), and
- second attachment means between the first transmission rod (430), respectively the second transmission rod (440), and the end of the first longitudinal body (131), respectively the second longitudinal body (231), provided so as to allow rotation at least along an axis parallel to the axis of rotation of the second axle (230) respectively the first axle (130), relatively to the second chassis (210), respectively the first chassis (110).

4. The train of transport vehicles according to claim 3, wherein:
- the first attachment means form a ball joint connection between the first transmission rod (430), respectively the second transmission rod (440), and the attachment point of the first steering arm (410), respectively the second steering arm (420), and
- the second attachment means form a ball joint connection between the first transmission rod (430), respectively the second transmission rod (440) and the end of the first longitudinal body (131), respectively the second longitudinal body (231).

5. The train of transport vehicles according to any of claims 2 to 4, wherein the first steering arm (410), respectively the second steering arm (420), is articulately mounted to the end of the first longitudinal body (131), respectively the second longitudinal body (231), according to a pivot connection around a pivot axis orthogonal to the sagittal plane (S) of the first longitudinal body (131), respectively the second longitudinal body (231).

6. The train of transport vehicles according to any of claims 1 to 5, wherein the first mechanical connection system (300) comprises a first connecting arm (310) extending in the extension of the first chassis (110) and a second connecting arm (320) extending in the extension of the second chassis (210), the first (310) and second (320) connecting arms having a first (311) and second (321) coupling end respectively, the first (311) and second (321) coupling ends being attached together via articulating means (330) provided for allowing rotation at least around an axis of rotation parallel to the axis of rotation of the first axle (130) relatively to the first chassis (110).

7. The train of transport vehicles according to claim 6, wherein the first connecting arm (310), respectively the second connecting arm (320), is articulately mounted to the end of the first chassis (110), respectively the second chassis (210), according to a pivot connection around a pivot axis orthogonal to the sagittal plane of the first chassis (110), respectively the second chassis (210), and the articulating means (330) for a ball joint connection between the first (311) and second (321) coupling ends.

8. The train of transport vehicles according to any of claims 1 to 7, comprising a head vehicle (100) and a tail vehicle (200) placed at each end of the train of vehicles, the head vehicle (100) and the tail vehicle (200) each having a free end not coupled with an adjacent vehicle, a driving axle (120; 220) being pivotally mounted under the respective chassis (110; 210) of the head vehicle (100) and of the tail vehicle (200) at the free end, each driving axle (120; 220) comprising disengageable means for driving the wheels borne by said driving axle (120; 220).

9. The train of vehicles according to claim 8, wherein the head vehicle (100) and the tail vehicle (200) each comprise a driver cabin for directing the train of vehicles in one displacement direction of the train of vehicles or in the other direction.

10. The train of transport vehicles according to any of claims 1 to 9, wherein each axle (120; 130; 220; 230) includes means adapted to pivot the wheels borne by said axle (120; 130; 220; 230) from a first vertical position where the wheels rest on a flat ground to a second tilted position where the wheels rest on the concave ground of a tunnel or the like, said wheels extending on the normal of the circle described by the tunnel and vice versa.
